# EUROPÄISCHE PATENTANMELDUNG

(11) **EP 0 996 044 A2**
(43) Veröffentlichungstag der Anmeldung: **26.04.2000**
(21) Anmeldenummer: 99810877.3
(22) Anmeldetag: 29.09.1999
(51) Int. Cl.: G05B 17/02

(54) **Verfahren zur Ermittlung des Grades der Aufgabenerfüllung technischer Systeme**

(30) Priorität: 19.10.1998 DE 19848094
(71) Anmelder: Asea Brown Boveri AG, 5401 Baden (CH)
(72) Erfinder: Rönnebeck, Horst, Dr., 79780 Stühlingen (DE)

(57) **Zusammenfassung**

Ein Verfahren zur Bestimmung des Grades der technischen Aufgabenerfüllung technischer Systeme berücksichtigt neben der reinen Verfügbarkeit des Systems auch die Folgenschwere eines Unverfügbarkeitsereignisses. In die Berechnung des so ermittelten Unverfügbarkeitsrisikos fliesst als Folgenschwere der Unverfügbarkeit auch der Resourcenverbrauch bei der Behebung derselben ein, ebenso wie die Möglichkeit, im Falle der Unverfügbarkeit Ersatzsysteme bereitzustellen. Beispielsweise kann zwischen geplanten und ungeplanten Unverfügbarkeiten unterschieden werden. Das Verfahren simuliert die Nutzungsdauer eines Systems als eine Folge von Durchläufen einer Monte-Carlo-Simulation, wobei innerhalb einer Simulation durch Funktionsblöcke die Interdependenz der einzelnen Komponenten nachgebildet wird. Die empirisch oder teilempirisch ermittelte Versagenswahrscheinlichkeit der Einzelkomponenten dient hierbei als Eingabegrösse. Ereignisse, die während eines Simulationsdurchlaufes auftreten, werden in den folgenden Simulationen berücksichtigt. Somit kann das reale Verhalten des Systems mit einfachen Vorgaben sehr genau beschrieben werden. Mit Hilfe des Verfahrens kann die Auslegung und die Instandhaltung des Systems so gesteuert werden, dass ein maximaler Grad der Erfüllung der technischen Aufgabe bei minimalem Resourceneinsatz resultiert.

## Beschreibung

### Technisches Gebiet

Die vorliegende Erfindung betrifft ein Verfahren nach dem Oberbegriff des Anspruchs 1.

### Stand der Technik

Vor dem Hintergrund einer ständig steigenden Weltbevölkerung gerade in den bis anhin schwächer entwickelten Regionen, der Notwendigkeit, auch diese Regionen zu industrialisieren, und dem daraus resultierenden Hunger nach natürlichen Resourcen, trat im Laufe der vergangenen beiden Jahrzehnte in der modernen Technik der effiziente und nachhaltige Einsatz von Rohstoffen und Energie zusehends in den Vordergrund.

Neben dem effizienten Resourceneinsatz beim Betrieb eines technischen Systems ist hierbei auch der Umstand zu sehen, dass technische Systeme selbst Resourcen binden, insbesondere in Form in ihnen verbauter Rohstoffe, und während ihrer Herstellung eingesetzter Energie, die sich trotz vermehrter Anstrengungen, den Kreislauf wirtschaftlich verwerteter Stoffe zu schliessen, meist nur unvollkommen und wiederum unter hohem neuerlichem Resourceneinsatz wiederverwerten lassen.

Die naheliegendste Möglichkeit, den Resouceneinsatz zu minimieren, besteht sicherlich in konsequentem Leichtbau und daraus resultierenden Materialeinsparungen, wie auch in vielen Fällen Energieeinsparungen. Jedoch ist zu berücksichtigen, dass ein technisches System nur dann überhaupt einen sinnvollen Resourceneinsatz darstellt, wenn es in der Lage ist, die gestellte Aufgabe mit hoher Effizienz zu verrichten. Daraus ergibt sich, dass ein System, das mit geringem Rohstoffeinsatz unter Verwendung modernster Technologien leicht und filigran konstruiert wurde, aufgrund einer verstärkten Belastung möglicherweise einen hohen Wartungsaufwand, höhere Ausfallrisiken und eine geringere Lebensdauer aufweist. Ab einer gewissen Grenze der Resourcenausnutzung in einem technischen System wird also der Fall auftreten, dass einzelne Komponenten häufig ausgetauscht werden müssen, dass häufige Stillstände erforderlich sind, und dass nicht zuletzt durch eine geringere Verfügbarkeit der Grad der Erfüllung der technischen Aufgabe sinkt, so, dass eine stärkere Redundanz des Systems erforderlich ist. In der Summe wird die ursprünglich erzielte Resouceneinsparung also wieder wettgemacht.

In diesem Zusammenhang darf auch nicht auf den reinen Verbrauch stofflicher Resourcen fokussiert werden: Ein hochkomplexes System höchster technischer Wertigkeit mit entsprechendem Wartungsbedarf bindet während seiner Planung, seiner Erstellung und seinem Einsatz hochqualifizierte Arbeitskraft, die bei der erforderlichen Spezialisierung ebenfalls zu einem knappen Gut wird.

Dagegen steht die Philosophie, technische Systeme sehr robust und einfach auszulegen. Aus dem Einsatz weniger, nur gering belasteter Komponenten resultiert ein zuverlässiges System mit geringem Wartungsaufwand und einem geringen Bedarf an Redundanz, das allerdings bei seiner Ausführung einen hohen Resourceneinsatz erfordert, und weniger effizient betrieben werden kann. Hinzu kommt, dass möglicherweise dieses System weit vor dem Ende seiner Lebensdauer veraltet, das heisst gegenüber dem Stand der Technik eine derart geringe Wertigkeit aufweist, dass es nicht länger in nennenswertem Ausmasse betrieben wird, woraus letztlich wieder eine mangelhafte Ausnutzung zusehends knapper und wertvoller Resourcen resultiert.

Der verantwortungsvolle Umgang mit natürlichen Resourcen stellt somit eine höchst komplexe Optimierungsaufgabe dar, deren Lösung davon abhängt, die Zusammenhänge richtig darzustellen und die unterschiedlichen Einflussgrössen möglichst realistisch zu bewerten.

Diese abstrakten Ausführungen seien nachfolgend anhand eines Beispiels dem interessierten Fachmann nahegebracht.

Es sei die Versorgung eines Netzes mit einer bestimmten elektrischen Leistung sicherzustellen. Einfach und schnell - auch mit geringem Rohstoffeinsatz - ist dies mit einer Anzahl Gasturbinen zu bewerkstelligen. Ausgangspunkt der Betrachtung seien Gasturbinen einer älteren bewährten Baureihe, mit moderaten Heissgastemperaturen und einem moderaten Brennkammerdruck. Hier kann mit einer hohen Zuverlässigkeit und geringem Wartungsaufwand, somit hoher Verfügbarkeit, gerechnet werden, allerdings auf Kosten des Wirkungsgrades. Insgesamt wird sich eine relativ geringe technische Wertigkeit des Systems ergeben, bedingt durch eine geringe Resourcenausnutzung, auch aufgrund geringer Materialauslastungen. Andererseits muss zur Aufrechterhaltung der technischen Funktion auch eine geringe Reserve vorgehalten werden, was den Resourceneinsatz verringert.

Hypothetisch werden nun die thermodynamischen Daten der Gasturbinen gesteigert. Damit steigt der Wirkungsgrad einer Maschine, und, da das Material höher belastet wird, auch die Rohstoffausnutzung. Im Gegenzug wird die Lebensdauer und Zuverlässigkeit bestimmter Komponenten, und der Wartungsaufwand, steigen. Ein höherer Wartungsaufwand bedeutet mehr Stillstandzeiten, weshalb mehr Reserve vorgehalten werden muss, anders ausgedrückt, es müssen Resourcen als Reserve für Unverfügbarkeiten vorgehalten werden, und diese Resourcen tragen nicht primär zur Funktion des technischen Systems bei. Das heisst, bei einer Wirkungsgraderhöhung der Gasturbinen steigt die Resourcenausnutzung zunächst, sinkt aber ab einem bestimmten Punkt aufgrund der notwendigen hohen Reservevorhaltung bezogen auf das Gesamtsystem "Stromversorgung" wieder.

Nunmehr kann bei einem bestimmten Entwicklungsstand der Gasturbinen ein Kombikraftwerk in Erwägung gezogen werden. Damit steigt der Rohstoffeinsatz bei der Herstellung, jedoch sinkt der Resourcenverbrauch bei der Stromproduktion. Andererseits steigt die Zahl der Komponenten, die einen Ausfall des Systems verursachen können, und es stellt sich wieder die Frage nach der notwendigen Redundanz zur Aufrechterhaltung der Funktion des Gesamtsystems.

Eine realistische Beurteilung der Verfügbarkeit eines technischen Systems, respektive der notwendigen Reservevorhaltung bedingt nunmehr, das Ausfallrisiko einer einzelnen Komponente zu kennen, und auch die Folgenschwere eines Ausfalls zu beurteilen: Nicht jede Komponente innerhalb eines Kraftwerks ist von so unmittelbarer Bedeutung für die technische Funktion, dass sein Ausfall mit dem Ausfall des Gesamtsystems gleichzusetzen ist. Mitunter kann eine Reparatur bis zur nächsten Wartung aufgeschoben werden. Auch ist die Folgenschwere einer Unverfügbarkeit des gesamten Systems nicht immer dieselbe: Eine geplante Unverfügbarkeit zu Wartungszwecken ist sicher leichter beherrschbar als ein plötzlicher Ausfall eines Kraftwerkes.

Hieraus resultiert weiterhin der Zwang, bei der Verfügbarkeitsanalyse die funktionalen Zusammenhänge zwischen den einzelnen Komponenten des Gesamtsystems, die und die Folgenschwere von Ausfällen zu berücksichtigen. Weiterhin gilt es auch, die Wartungs- und Teileaustauschstrategie in Betracht zu ziehen. Die Wahrscheinlichkeit einer unvermittelten Unverfügbarkeit sinkt sicher, wenn Wartungsmassnahmen rechtzeitig durchgeführt werden. Andererseits ist auch die Wartung eine Unverfügbarkeit, und der Austausch von Teilen ein Resourcenverbrauch. Es kann ein Bauteil ausgetauscht worden sein, das noch lange gehalten hätte, und durch eines ersetzt worden sein, das durch einen Fabrikationsfehler recht bald versagt. Ebenso kann es bei der Wartung selbst zu Fehlern kommen, was wiederum durch den Verbrauch der Resource "Qualifiziertes Personal" beeinflusst wird.

Es wird deutlich, welche Faktoren bei ganzheitlichen Beurteilung der Zuverlässigkeit eines technischen Systems zu berücksichtigen sind: Neben der reinen Unverfügbarkeitswahrscheinlichkeit muss auch die Folgenschwere einer Unverfügbarkeit berücksichtigt werden, worunter die Nichterfüllung der technischen Aufgabe, der zur Behebung einer Unverfügbarkeit notwendige Resoucenverbrauch - Rohstoffe und qualifizierte Arbeitskraft - sowie ein zur Reservevorhaltung notwendiger Resoucenverbrauch zu subsummieren sind, wobei diese Aufzählung keinen Anspruch auf Vollständigkeit erhebt. Weiterhin ist sinnvollerweise der gesamte zur Bereitstellung des technischen Systems notwendige Resourceneinsatz zu gewichten: Ein vielfach redundantes System wird zu einer geringen Unverfügbarkeitswahrscheinlichkeit führen, wobei das System aber unverhälntnismässig viele Resourcen bindet.

Schliesslich muss noch berücksichtigt werden, dass eine neue Technologie, die prima facie ein höheres Unverfügbarkeitsrisiko beinhaltet, über die Lebensdauer eines technischen Systems wie eines Kraftwerks weiterentwickelt wird, und die Verfügbarkeit durch sukzessiven Austausch von Komponenten gegen verbesserte Varianten erhöht wird.

Dieser unvollständige Abriss zeigt die enorme Komplexität des der Erfindung zugrundeliegenden Problems. Derartige Verfügbarkeitsanalysen werden bis anhin beispielsweise mit Hilfe der Fehlerbaumanalyse, der Ereignisbaumanalyse , oder der Markov-Analyse durchgeführt. Mit allen genannten Verfahren ist es schwierig, zu einer Beurteilung der Folgenschwere einer Unverfügbarkeit, zu kommen. Mit Ausnahme der Markov-Analyse ist keines der Verfahren in der Lage, den Einfluss unterschiedlicher Wartungsstrategien zu berücksichtigen. Allerdings ist das Markov-Verfahren selbst derart komplex, dass nur eine geringe Komplexität der Aufgabe zu erfassen ist. Weiterhin wird bei diesem Verfahren übersehen, dass Wartungs- und Reparaturmassnahmen einen Einfluss auf das weitere Verhalten des technischen Systems im Hinblick auf die Verfügbarkeit haben.

Nach dem Stand der Technik ist kein Verfahren bekannt, das in der Lage ist, die oben dargestellten hochkomplexen Zusammenhänge so realistisch darzustellen, dass eine zuverlässige Vorhersage der Verfügbarkeit technischer Systeme und damit der notwendigen Redundanz ermöglicht wird.

### Darstellung der Erfindung

Ziel der Erfindung ist es also, bei einem Verfahren der eingangs genannten Art die Auswirkungen geplanter und zufälliger Ereignisse auf die Verfügbarkeit eines technischen Systems realitätsnah zu berücksichtigen.

Erreicht wird dies durch die Merkmale des Anspruchs 1.

Kern der Erfindung ist es also, das Unverfügbarkeitsrisiko eines technischen Systems zu ermitteln, und durch eine Anpassung einer Wartungs- und Teileaustauschstrategie zu verbessern, oder aber bereits in der Planungsphase entsprechend Einfluss zu nehmen. Erfindungsgemäss wird hierzu ein Funktionsdiagramm des technischen Systems erstellt, welches das Zusammenspiel der unterschiedlichen Komponenten wiedergibt. Mittels eines Monte-Carlo-Verfahrens wird sodann die Nutzungsdauer des Systems in einer Folge von Simulationsdurchläufen simuliert. Dabei wird aufgrund der vorgegebenen Unverfügbarkeitswahrscheinlichkeit jeder Einzelkomponente bei jedem Simulationsdurchlauf entschieden, ob ein Unverfügbarkeitsereignis eingetreten ist. Die vorgegebenen funktionellen Zusammenhänge des Gesamtsystems in der Simulation ermöglichen, die Auswirkungen des Versagens einer einzelnen Komponente auf die Verfügbarkeit des gesamten Systems zu ermitteln, und die Folgenschwere einer Unverfügbarkeit zu bestimmen. So kann beispielsweise festgestellt werden, ob ein sofortiger Ausfall des Gesamtsystems die Folge der Unverfügbarkeit einer Komponente ist, und wie lange diese Unverfügbarkeit des Gesamtsystems andauern wird. Auf diese Weise können die Unverfügbarkeiten des Systems über alle Simulationsschritte, anders ausgedrückt die Nutzungsdauer des Systems, mit der jeweiligen Folgenschwere gewichtet aufsummiert werden, woraus sich der Verlauf des Unverfügbarkeitsrisikos des Systems über seiner Nutzungsdauer ergibt.

Ein wesentlicher Vorteil des Verfahrens ist also, neben der reinen Unverfügbartkeitswahrscheinlichkeit auch die Folgenschwere einer Unverfügbarkeit - Dauer, Resourceneinsatz zur Behebung eines Schadens, geplante oder ungeplante Unverfügbarkeit - berücksichtigen zu können. Ein weiterer grosser Vorteil des erfindungsgemässen Verfahrens ist, dass eingetretene Ereignisse im folgenden Simulationsschritt berücksichtigt werden.

### Kurze Beschreibung der Zeichnung

Fig.1 zeigt beispielhaft den Verlauf der Unverfügbarkeitswahrscheinlichkeit eines technischen Systems als Funktion der Nutzungsdauer für unterschiedliche Wartungsintervalle.

Fig. 2 zeigt den aus diesen Strategien resultierenden Verlauf des Unverfügbarkeitsrisikos über der Nutzungsdauer.

Fig. 3 zeigt schematisch einen Ablaufplan zur Ausführung der erfindungsgemässen Verfahrens.

### Weg zur Ausführung der Erfindung

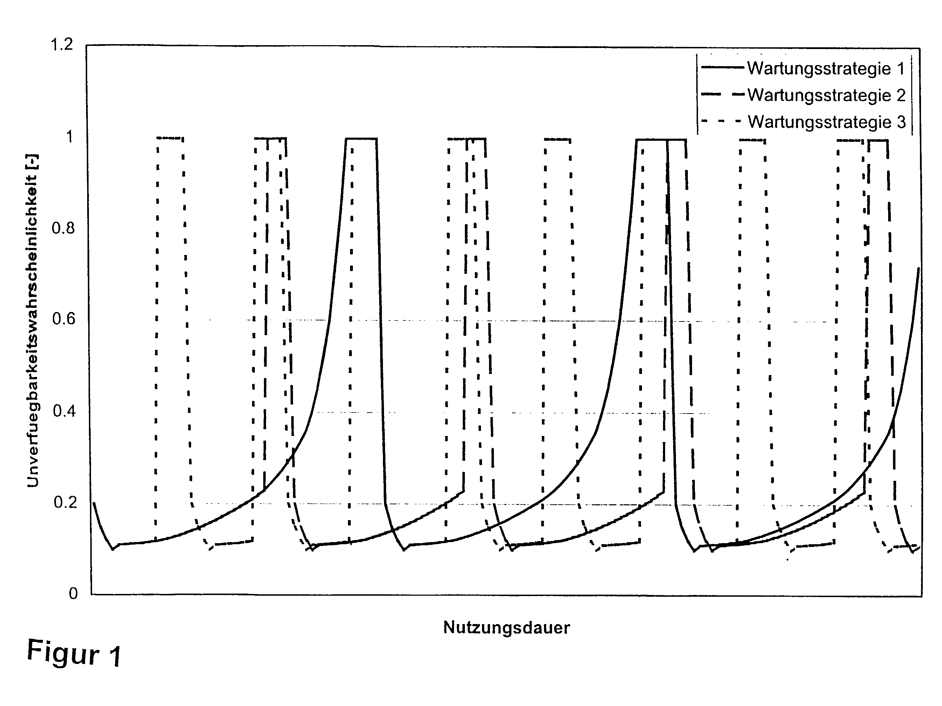

Die technische Lehre der Erfindung sei vorweg an einem sehr greifbaren Beispiel illustriert. Fig. 1 zeigt den zeitlichen Verlauf der Unverfügbarkeitswahrscheinlichkeit eines technischen Systems, wobei ein zur Minimierung des Unverfügbarkeitsrisikos, und somit zur Erzielung eines maximalen Grades der Aufgabenerfüllung, mithin also einer optimalen Resoucenausnutzung, am besten geeignetes Wartungsintervall bestimmt werden soll. Ganz konkret könnten dies die Wartungsintervalle eines Kraftfahrzeuges sein.

Zum Zeitpunkt t=0 wurde soeben eine Wartung beendet. Die Erfahrung lehrt, dass unmittelbar nach Eingriffen in ein technisches System die Unverfügbarkeitswahrscheinlichkeit leicht erhöht ist. So wurde beispielsweise die Ölablassschraube nicht richtig festgezogen sein, oder ein Keilriemen gegen einen aus fehlerhafter Produktion ausgetauscht. Unmittelbar nach einer Wartung sinkt die Unverfügbarkeitswahrscheinlichkeit recht schnell auf ein Minimum, und steigt dann aufgrund fortschreitenden Verschleisses wieder an. Bei der nächsten Wartung ist der Kraftwagen dann mit Sicherheit unverfügbar; die Unverfügbarkeitswahrscheinlichkeit wird also zu 1. Im Beispiel wurde weiterhin berücksichtigt, dass beim längsten Wartungsintervall die Unverfügbarkeitsdauer grösser ist.

Wie ersichtlich ist, wird die kumulierte Unverfügbarkeitswahrscheinlichkeit bei der Wartungsstrategie 1 am kleinsten.

Diese Betrachtung ist jedoch zur Beurteilung der Aufrechterhaltung der Wertigkeit des technischen Systems "Kraftwagen" absolut unzureichend. Denn die Folgen einer Panne bei Nacht und Regen auf einer einsamen Landstrasse sind ungleich höher zu bewerten als die Folgen eines geplanten Werkstattbesuches: Im letzteren Fall kann zur Aufrechterhaltung der technischen Funktion "Fortbewegung" problemlos im Voraus der Einsatz einer Ersatzresource, beispielsweise Bus oder Fahrrad, zurückgegriffen werden. Weiterhin müssen bei der Beurteilung des Unverfügbarkeitsrisikos des Gesamtsystems auch immer die Unverfügbarkeitswahrscheinlichkeit und Folgenschwere der Unverfügbarkeit einzelner Komponenten berücksichtigt werden: Ein defektes Scheibenwischerblatt mag zwar vergleichsweise wahrscheinlich sein, jedoch werden die meisten Fahrer dies ohne Werkstattaufenthalt beheben können, weshalb die Folgenschwere praktisch Null ist. Der Ausfall der Lichtmaschine bedingt zwar in den meisten Fällen einen Werkstattaufenthalt, die Wahrscheinlichkeit, mit der Batterie die nächste Werkstatt oder gar das Reiseziel zu erreichen, ist jedoch relativ gross. Die Folgenschwere einer ausgefallenen Ölpumpe oder gar eines Bremsenversagens muss hingegen sehr hoch beurteilt werden.

Weiterhin ist bei Schäden, die einen Werkstattaufenthalt bedingen, zu unterscheiden, ob sie unmittelbar die technische Aufgabenerfüllung des Systems verhindern, oder ob die Funktion in Grenzen aufrechterhalten wird, ein notwendiger Werkstattaufenhalt also im Voraus geplant werden kann.

All diese Faktoren sind durch ein Verfahren, zur Ermittlung der Verfügbarkeit eines technischen Systems sinnvoll miteinander zu verknüpfen.

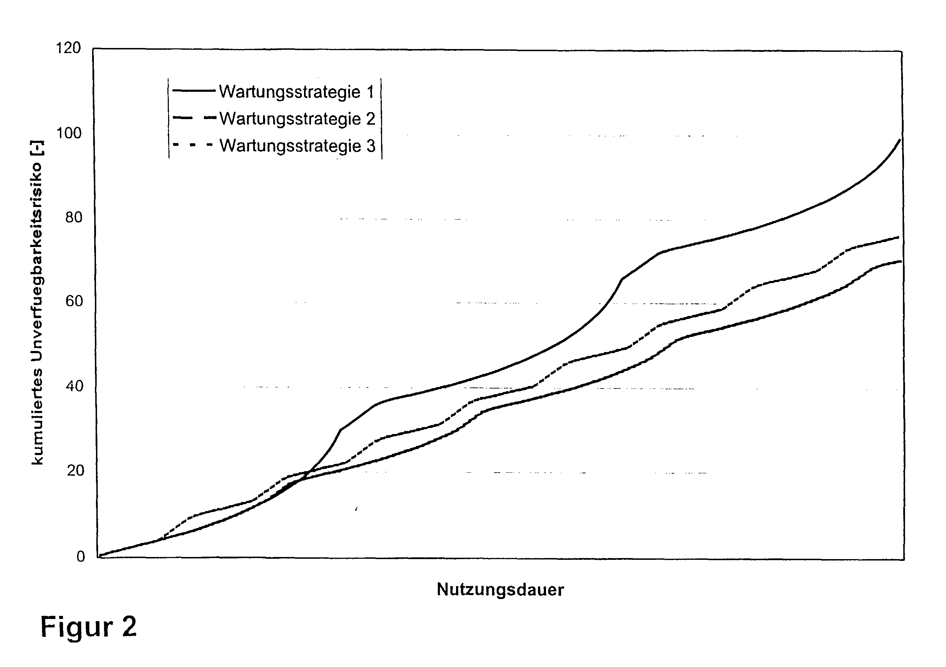

Wird für das angeführte Beispiel das resultierende kumulierte Unverfügbarkeitsrisiko ermittelt, so zeigt Fig. 2, dass Wartungsstrategie 2 recht nahe am Optimum liegt.

Die Ermittlung des Unverfügbarkeitsrisikos wird erfindungsgemäss durch eine Monte-Carlo-Simulation vorgenommen. Diese simuliert die Nutzungsdauer eines technischen Systems als Folge von Zeitschritten. Vor jedem Zeitschritt findet eine Zufallsentscheidung statt, ob eine Komponente versagt oder nicht, wobei die Häufigkeit der Versagensereignisse von einer vorgegebenen Versagenswahrscheinlichkeit einer Komponente abhängt. Ein Versagen wird - auch in Abhägigkeit von der Signifikanz der Wirkung einer Komponente im System - mit der Folgenschwere gewichtet. Das heisst, anhand der Funktionsblöcke kann entschieden werden, ob ein Versagensereignis eine unmittelbare Unverfügbarkeit des Gesamtsystems zur Folge hat, und welcher Resourceneinsatz notwendig ist, um den Defekt zu beheben. Dabei ist die Monte-Carlo-Simulation in der Lage, auch die Zusammenhänge sehr komplexer Systeme mit vertretbarem Aufwand zu erfassen. Dabei kann ein nicht behobener Schaden Einfluss auf die folgenden Simulationsschritte nehmen, ebenso wie der Austausch einer Komponente.

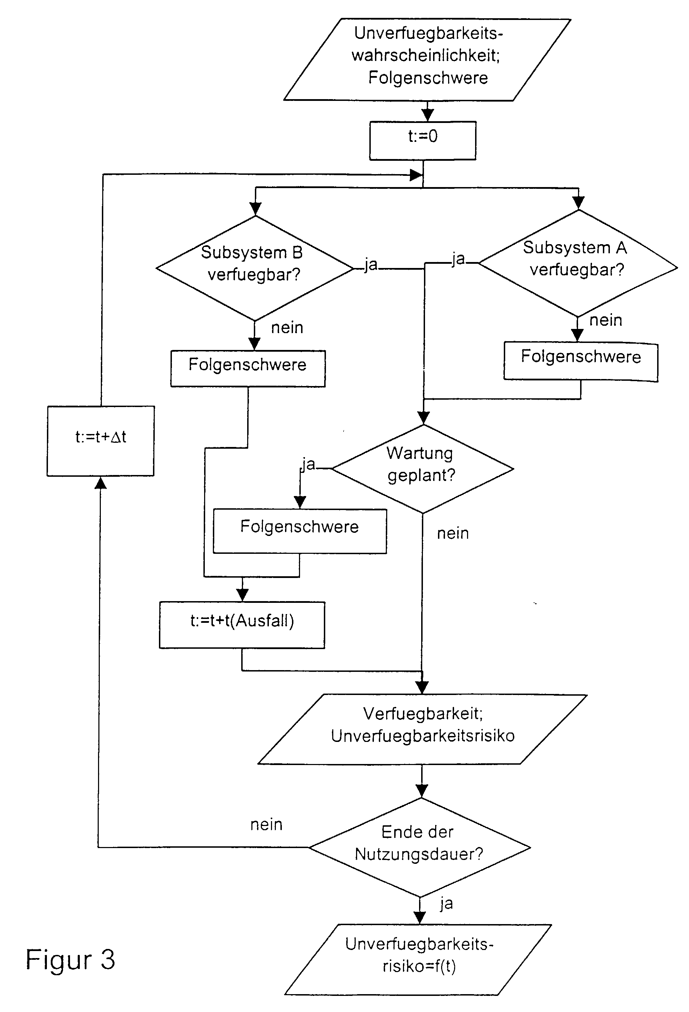

Ein Beispiel für den erfindungsgemässen Verfahrensablauf ist im Flussdiagramm in Fig. 3 dargestellt. Zunächst müssen der Simulation die Daten für die Unverfügbarkeitswahrscheinlichkeit der einzelnen Komponenten als Funktion der Einsatzdauer einer Komponente zur Verfügung gestellt werden. Danach kann mit der Simulation ab einem Bezugszeitpunkt begonnen werden. Das nachfolgende Funktionsdiagramm muss das Zusammenspiel der einzelnen Komponenten des technischen Gesamtsystems wiedergeben, und besteht allgemein aus Blöcken, die parallel, in Serie oder als k-aus-n-Logiken zusammengesetzt sind. Es ist hierbei nützlich, die einzelnen Komponenten ihrer Funktion entsprechend in hierarchisch gegliederte Untersysteme aufzuteilen. Im Ausführungsbeispiel sind dies zwei Subsysteme A und B, wobei Subsystem B einen unmittelbaren Einfluss auf die Funktion des technischen Gesamtsystems hat, Subsystem A keine zumindest unmittelbare Wirkung.

In einem ersten Schritt wird überprüft, ob die Subsysteme A und B verfügbar sind. Ist Subsystem B unverfügbar, oder ist eine Wartung geplant, tritt ein Unverfügbarkeitsereignis ein, das jeweils mit der Folgenschwere der jeweiligen Unverfügbarkeit gewichtet wird. Im Falle eines Stillstandes können nun mehrere Parameter verändert werden, beispielsweise wird die Einsatzdauer einer ausgetauschten Komponente wieder zu Null gesetzt, oder deren Unverfügbarkeitswahrscheinlichkeit verändert, falls die Komponente gegen eine verbesserte Version ausgetauscht wurde. Schliesslich kann das Unverfügbarkeitsrisiko als Funktion der Zeit dargestellt werden.

Die Versagenswahrscheinlichkeit einer einzelnen Komponente, die bei dem erfindungsgemässen Verfahren ausreicht, um die Verfügbarkeit des Gesamtsystems zu ermitteln, kann beispielsweise aus Erfahrungen im Feldeinsatz empirisch gewonnen worden sein. Bei konstruktiven Veränderungen sind die Auswirkungen der ergriffenen Massnahmen zu extrapolieren. Die Daten der Zuverlässigkeit der Einzelkomponenten sind also mit vergleichsweise hoher Genauigkeit bekannt. Bei einem sinnvollen Aufbau der Funktionsblöcke des erfindungsgemässen Verfahrens kann die Gesamtverfügbarkeit zu einem bestimmten Zeitpunkt der Nutzungsdauer in sehr engen Grenzen spezifiziert werden.

Ein solches Verfahren ist selbstverständlich bereits bei der Auslegung eines technischen Systems äusserst nützlich. So kann beispielsweise die Redundanz verschiedener Subsysteme im Funktionsdiagramm dargestellt und die Auswirkungen einer Veränderung der funktionalen Zusammenhänge bereits in der Design-Phase beobachtet werden. Weiterhin kann auch die Verfügbarkeit eines beliebig komplexen Gesamtsystems in Abhängigkeit der Wartungszyklen und des Austauschs von Verschleissteilen ermittelt werden, um somit eine verbesserte Resourcenausnutzung zu ermöglichen. Werden als Folgenschwere Ereigniskosten eingesetzt, ermöglicht dies wiederum eine Vorhersage von Projektkosten.

Die technische Lehre des Erfindungsgegenstandes besteht zusammenfassend darin, dass dem Fachmann eine Möglichkeit offenbart wird, bereits in der Planungsphase hochkomplexe technische Systeme so auszulegen, dass die Erfüllung der technischen Aufgabe des Systems mit grösstmöglicher Effizienz aufrechterhalten wird. Dabei können auch negative Wirkungen einer steigenden Systemkomplexität und eine daraus resultierende schlechtere Resourcenausnutzung frühzeitig erkannt und vermieden werden. Da zufällige und geplante Ereignisse erfasst und entsprechend ihrer Folgenschwere gewichtet werden, können weiterhin optimale Zeitpunkte für Wartung und Teileaustausch bestimmt werden. Ebenso kann, wenn eine Komponente in einer verbesserten Ausführung zur Verfügung steht, der beste Zeitpunkt für deren Austausch mit Hilfe des erfindungsgemässen Verfahrens ermittelt werden.

Insgesamt weist das erfindungsgemässe Verfahren somit den Weg zu einer Optimierung der Verfügbarkeit technischer Systeme und einer verbesserten Resourcenausnutzung.

## Patentansprüche

1. Verfahren zur Ermittlung des Grades der Aufgabenerfüllung technischer Systeme unter Berücksichtigung einer Wartungs- und Teileaustauschstrategie, dadurch gekennzeichnet, dass in einer Monte-Carlo-Simulation ein funktionelles Zusammenwirken einzelner Komponenten des Systems durch Funktionsblöcke dargestellt wird, welche Funktionsblöcke die Auswirkungen des Versagens einer Komponente auf die Verfügbarkeit des Gesamtsystems wiedergeben, dass die Veränderung der Verfügbarkeit des Systems aufgrund zufälliger und geplanter Ereignisse mit Faktoren gewichtet wird, welche Faktoren aus einer Folgenschwere einer Unverfügbarkeit gebildet werden, welche Folgenschwere die Planbarkeit der Unverfügbarkeit und den zur Behebung notwendigen Resourceneinsatz beinhaltet, dass der zeitliche Verlauf der Systemverfügbarkeit in Abhängigkeit von einer Wartungs- und Teileaustauschstrategie ermittelt wird, dass eine teilempirisch ermittelte Lebensdauer unterschiedlicher Systemkomponenten berücksichtigt wird, und dass die Auswirkung von Ereignissen wie Reparatur- und Wartungsmassnahmen auf den weiteren zeitlichen Verlauf der Systemverfügbarkeit berücksichtigt wird.
